# EUROPÄISCHE PATENTSCHRIFT

(11) **EP 1 943 155 B1**
(45) Veröffentlichungstag und Bekanntmachung des Hinweises auf die Patenterteilung: **15.07.2009**
(21) Anmeldenummer: 06805706.6
(22) Anmeldetag: 14.09.2006
(51) Int. Cl.: B65D 33/16

(54) **VERSCHLUSSKLAMMER FÜR VERPACKUNGSSCHLAUCH**
CLOSURE CLIP FOR A PACKAGING TUBE
BRIDE DE FERMETURE DESTINEE A UN TUYAU FLEXIBLE D'EMBALLAGE

(30) Priorität: 14.09.2005 DE 202005014590 U
(43) Veröffentlichungstag der Anmeldung: 16.07.2008
(73) Patentinhaber: Tipper Tie technopack GmbH, 21509 Glinde (DE)
(72) Erfinder: PEACH, Martin, 21029 Hamburg (DE)
(74) Vertreter: Glawe, Delfs, Moll
(86) Internationale Anmeldenummer: PCT/EP2006/008939
(87) Internationale Veröffentlichungsnummer: WO 2007/031305

(56) Entgegenhaltungen:
- EP-A- 0 757 003
- AT-B- 171 031
- DE-A1- 2 801 777
- DE-C1- 3 811 978
- DE-C1- 19 754 199

## Beschreibung

Die Erfindung betrifft eine Verschlussklammer zum Verschließen eines Verpackungsschlauchs. Die Verschlussklammer umfasst zwei Klammerschenkel und einen zwischen den Klammerschenkeln angeordneten Klammerboden, wobei die Klammerschenkel gegenüber im Klammerboden abgewinkelt sind.

Solche Verschlussklammern kommen insbesondere bei der Wurstherstellung zum Einsatz. Durch ein Füllrohr wird Wurstbrät in den Verpackungsschlauch eingebracht. Wenn eine Verpackungseinheit gefüllt ist, wird das Ende des Verpackungsschlauchs zu einem füllgutfreien Abschnitt gerafft, und die Verschlussklammer wird zum dauerhaften verschließen der Verpackungseinheit um den füllgutfreien Abschnitt herumgebogen.

Für einen sicheren Verschluss muss die Reibung zwischen der Verschlussklammer und dem Verpackungsschlauch so groß sein, dass die Verschlussklammer nicht durch eine parallel zur Richtung des Verpackungsschlauchs wirkende Kraft von dem Verpackungsschlauch abgezogen werden kann. Erweist es sich, dass die Reibungskraft zu klein ist, ist es bisher üblich, die Verschlussklammer fester zusammenzupressen, so dass sie mit einem größeren Druck auf dem Verpackungsschlauch aufliegt. Insbesondere bei Verpackungsschläuchen aus empfindlichem Naturdarm kann der Druck jedoch nicht beliebig erhöht werden, da die Gefahr besteht, dass der Darm einreißt.

Aus der EP 0 337 301 B1 ist es bekannt, die auf dem Verpackungsschlauch aufliegende Fläche mit eingeprägten Vertiefungen zu versehen. Die Kanten der Vertiefungen greifen ein Stück weit in das Material des Verpackungsschlauchs ein, so dass die Reibung zwischen Verschlussklammer und Verpackungsschlauch gegenüber einer glatten Oberfläche erhöht ist. Die in die Oberfläche der Verschlussklammern eingeprägten Vertiefungen erhöhen zwar die Reibung, jedoch ist die Wirkung begrenzt.

Das Dokument DE 19754199 C1 offenbart eine Verschlussklammer entsprechend dem Oberbegriff der Ansprüche 1 und 7.

Der Erfindung liegt die Aufgabe zugrunde, eine Verschlussklammer vorzustellen, die einen noch besseren Halt auf dem Verpackungsschlauch bietet. Die Aufgabe wird erfindungsgemäß durch die im kennzeichnenden Teil der Ansprüche 1 und 7 enthaltenen Merkmale gelöst. Vorteilhafte Ausführungsformen finden sich in den Unteransprüchen.

Die Verschlussklammer zeichnet sich erfindungsgemäß dadurch aus, dass die Oberfläche der Verschlussklammer ganz oder teilweise mit einer durch Bestrahlung mit einem Partikelstrahl erhältlichen Struktur versehen ist. Die so erhältliche Struktur weist eine Vielzahl von feinen Erhöhungen und Vertiefungen auf, so dass die Oberfläche im Vergleich zu einer glatten Form ohne Struktur vergrößert ist. Die vergrößerte Oberfläche liegt auf dem Verpackungsschlauch auf, die Reibung zwischen Verschlussklammer und Verpackungsschlauch ist erhöht. Es ist ein geringerer Druck zwischen Verschlussklammer und Verpackungsschlauch erforderlich, um einen sicheren Halt zu gewährleisten.

Ein zweiter Effekt, der außer der vergrößerten Oberfläche wahrscheinlich ebenfalls dazu beiträgt, den Halt zu verbessern, ist die Verdichtung der Oberfläche unter der Einwirkung des Partikelstrahls. Die mit hoher Geschwindigkeit auf die Oberfläche der Verschlussklammer auftreffenden Partikel üben lokal eng begrenzt eine große Kraft auf die Oberfläche der Verschlussklammer aus. An den Stellen, an denen das Oberflächenmaterial eine geringere Festigkeit aufweist, werden komprimiert, so dass sich kleine Dellen bilden. Da die Oberfläche durch die Vielzahl von Teilchen flächendeckend behandelt wird, wird das Oberflächenmaterial insgesamt verdichtet. Die Struktur der Oberfläche hat dadurch insgesamt eine erhöhte Festigkeit, was ebenfalls zu einem verbesserten Halt zwischen der Verschlussklammer und dem Verpackungsschlauch beiträgt.

Die strukturellen Merkmale der erfindungsgemäßen Verschlussklammer sind nicht ohne weiteres zu erfassen. Zweckmäßig erscheint es deswegen, die Merkmale der Verschlussklammer über das Herstellungsverfahren zu definieren (Product-by-process-Anspruch).

Versuche haben gezeigt, dass die Reibung zwischen der Verschlussklammer und dem Verpackungsschlauch mit der durch einen Partikelstrahl erzeugten Oberflächenstruktur in deutlich größerem Maße erhöht wird als mit den im Stand der Technik bekannten eingeprägten Vertiefungen.

Es ist nicht erforderlich, dass die gesamte Oberfläche der Verschlussklammer mit einer Struktur versehen ist. Ausreichend kann ein Flächenanteil von 20%, vorzugsweise 30%, weiter vorzugsweise 40% sein. Entscheidend ist es, dass die Struktur auf dem Teil der Oberfläche besteht, mit dem die Verschlussklammer auf dem Verpackungsschlauch aufliegt. Deswegen ist zumindest die als Innenseite der Verschlussklammer bezeichnete Seite, über die die Klammerschenkel gegenüber dem Klammerboden abgewinkelt sind, ganz oder teilweise mit der Struktur versehen.

Die Partikel des Partikelstrahls werden von einem sich mit hoher Geschwindigkeit bewegenden Luftstrahl mitgeführt. Vorzugsweise wird der Luftstrahl auf die Weise erzeugt, dass er unter einem Druck zwischen 2 bar und 8 bar, weiter vorzugsweise mit einem Druck zwischen 4 bar und 6 bar aus einem Druckbehälter austritt. Bei einem mit diesem Druck erzeugtem Luftstrahl haben die Partikel die geeignete Geschwindigkeit zur Erzeugung der Struktur.

Die Partikel können aus einem beliebigen der gängigerweise als Strahlgut verwendeten Stoffe bestehen. Als vorteilhaft hat es sich erwiesen, wenn die Partikel Glasperlen sind.

Als besonders wirksam hat sich die Bestrahlung der Verschlussklammer mit einem Partikelstrahl erwiesen, wenn die Verschlussklammer aus Aluminium oder einer Aluminiumlegierung gefertigt ist.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine erfindungsgemäße Verschlussklammer; und
- Fig. 2: eine weitere erfindungsgemäße Verschlussklammer.

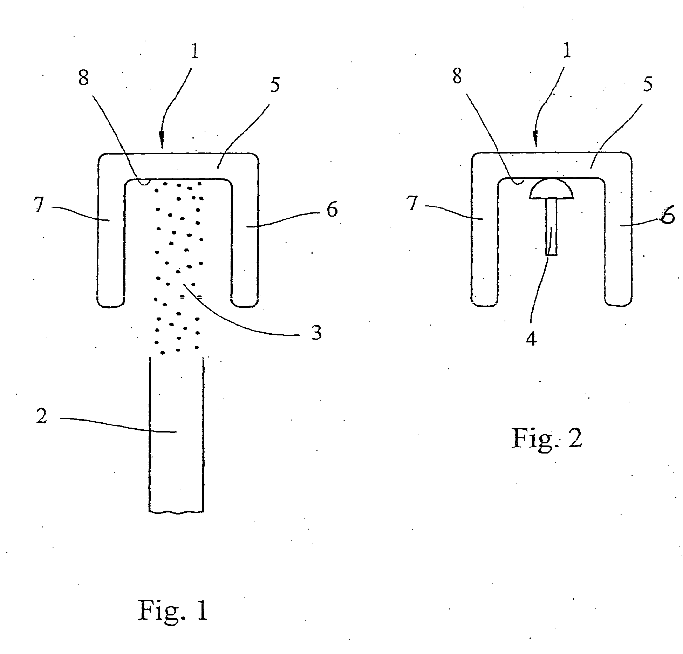

Eine Verschlussklammer 1 umfasst einen Klammerboden 5 und zwei gegenüber dem Klammerboden 5 über die Innenseite 8 umgebogenen Klammerschenkel 6, 7. In Fig. 1 wird die Verschlussklammer 1 an ihrer Innenseite 8 mit aus einem Strahlrohr 2 austretenden Partikeln 3 bestrahlt. Die Partikel 3 wirken auf die Oberfläche der Verschlussklammer 1 ein und erzeugen eine aus feinen Vertiefungen und Erhöhungen bestehende Struktur auf der Oberfläche.

Wenn die Verschlussklammer 1 mit der strukturierten Oberfläche auf einem Verpackungsschlauch aufliegt, ist die Reibung zwischen der Oberfläche der Verschlussklammer und dem Verpackungsschlauch groß. Es ist mehr Kraft erforderlich, um die Verschlussklammer 1 vom Verpackungsschlauch abzuziehen. Die Verschlussklammer 1 bietet einen sicheren Verschluss.

Das Bestrahlen mit dem Partikelstrahl 3 kann der letzte Schritt bei der Herstellung der Verschlussklammer 1 sein, wenn die ansonsten fertige Verschlussklammer 1 mit dem Partikelstrahl 3 behandelt wird. Alternativ kann auch der Draht, aus dem die Verschlussklammer 1 später hergestellt wird mit dem Partikelstrahl 3 behandelt werden. In diesem Fall wird die Oberflächenstruktur in einem wesentlich früheren Stadium der Herstellung erzeugt.

Alternativ kann die Struktur auf der Oberfläche der Verschlussklammer 1 gemäß Fig. 2 auch mit Hilfe eines Stempels 4 erzeugt werden. Die Oberfläche des Stempels 4 wurde zuvor mit einem Partikelstrahl bestrahlt, so dass die Oberfläche des Stempels 4 als Negativform für die Struktur auf der Oberfläche der Verschlussklammer 1 dienen kann. Wenn mit dem Stempel 4 ein Druck auf die Oberfläche der Verschlussklammer 1 ausgeübt wird, übernimmt die Verschlussklammer 1 die Oberflächenstruktur vom Stempel 4.

## Patentansprüche

1. Verschlussklammer zum Verschließen eines Verpackungsschlauchs mit zwei Klammerschenkeln (6, 7) und einem zwischen den Klammerschenkeln (6, 7) angeordneten Klammerboden (5), wobei die Klammerschenkel (6, 7) gegenüber dem Klammerboden (5) abgewinkelt sind, **dadurch gekennzeichnet, dass** die Oberfläche der Verschlussklammer (1) ganz oder teilsweise, zumindest im Bereich der Innenseite, mit einer durch Bestrahlung mit einem Partikelstrahl (3) erhaltenen Struktur versehen ist.

2. Verschlussklammer nach Anspruch 1, **dadurch gekennzeichnet, dass** die Oberfläche der Verschlussklammer (1) zu einem Anteil von mindestens 20%, vorzugsweise mindestens 30%, weiter vorzugsweise mindestens 40% mit der Struktur versehen ist.

3. Verschlussklammer nach Anspruch 1 oder 2, **dadurch gekennzeichnet, dass** die Innenseite (8), über die die Klammerschenkel (6, 7) gegenüber dem Klammerboden (5) umgebogen sind, ganz oder teilweise mit einer Struktur versehen ist.

4. Verschlussklammer nach einem der Ansprüche 1 bis 3, **dadurch gekennzeichnet, dass** der Partikelstrahl (3) mit einem Druck zwischen 2 bar und 8 bar, vorzugsweise mit einem Druck zwischen 4 bar und 6 bar auf die Oberfläche gerichtet wurde.

5. Verschlussklammer nach einem der Ansprüche 1 bis 4, **dadurch gekennzeichnet, dass** die Partikel (3) Glasperlen sind.

6. Verschlussklammer nach einem der Ansprüche 1 bis 5, **dadurch gekennzeichnet, dass** sie aus Aluminium oder einer Aluminiumlegierung gefertigt ist.

7. Verschlussklammer zum Verschließen eines Verpackungsschlauchs mit zwei Klammerschenkeln (6, 7) und einem zwischen den Klammerschenkeln (6, 7) angeordneten Klammerboden (5), wobei die Klammerschenkel (6, 7) gegenüber dem Klammerboden (5) abgewinkelt sind, wobei die Oberfläche der Verschlussklammer (1) mit einer Struktur versehen ist und dass die Struktur durch Druckkontakt mit einem Stempel (4) erhältlich ist, **dadurch gekennzeichnet, dass** der Stempel eine durch Bestrahlung mit einem Partikelstrahl erzeugte Oberflächenstruktur aufweist.

## Claims

1. Closure clip for closing a packaging tube having two clip limbs (6, 7) and a clip base (5) which is arranged between the clip limbs (6, 7), the clip limbs (6, 7) being angled away with respect to the clip base (5), **characterized in that** the surface of the closure clip (1) is provided, at least in the region of the inner side, completely or partially with a structure which is obtained by exposure to a particle jet (3).

2. Closure clip according to Claim 1, **characterized in that** a proportion of at least 20%, preferably at least 30%, more preferably at least 40%, of the surface of the closure clip (1) is provided with the structure.

3. Closure clip according to Claim 1 or 2, **characterized in that** the inner side (8), via which the clip limbs (6, 7) are bent over with respect to the clip base (5), is provided completely or partially with a structure.

4. Closure clip according to one of Claims 1 to 3, **characterized in that** the particle jet (3) has been directed onto the surface at a pressure between 2 bar and 8 bar, preferably at a pressure between 4 bar and 6 bar.

5. Closure clip according to one of Claims 1 to 4, **characterized in that** the particles (3) are glass pearls.

6. Closure clip according to one of Claims 1 to 5, **characterized in that** it is produced from aluminium or an aluminium alloy.

7. Closure clip for closing a packaging tube having two clip limbs (6, 7) and a clip base (5) which is arranged between the clip limbs (6, 7), the clip limbs (6, 7) being angled away with respect to the clip base (5), the surface of the closure clip (1) being provided with a structure, and it being possible for the structure to be obtained by pressure contact with a die (4), **characterized in that** the die has a surface structure which is produced by exposure to a particle jet.

## Revendications

1. Bride de fermeture pour fermer un tuyau souple d'emballage, comprenant deux branches de bride (6, 7) et un fond de bride (5) disposé entre les branches de bride (6, 7), dans laquelle les branches de bride (6, 7) sont recourbées par rapport au fond de bride (5), **caractérisée en ce que** la surface de la bride de fermeture (1) est munie, en totalité ou en partie, au moins au niveau du côté intérieur, d'une structure obtenue par irradiation avec un faisceau de particules (3).

2. Bride de fermeture selon la revendication 1, **caractérisée en ce que** la surface de la bride de fermeture (1) est munie de la structure dans une proportion d'au moins 20 %, de préférence d'au moins 30 %, de plus grande préférence d'au moins 40 %.

3. Bride de fermeture selon la revendication 1 ou 2, **caractérisée en ce que** le côté intérieur (8), par lequel les branches de bride (6, 7) sont recourbées par rapport au fond de bride (5), est muni d'une structure, en totalité ou en partie.

4. Bride de fermeture selon l'une quelconque des revendications 1 à 3, **caractérisée en ce que** le faisceau de particules (3) était dirigé sur la surface à une pression entre 2 bars et 8 bars, de préférence à une pression entre 4 bars et 6 bars.

5. Bride de fermeture selon l'une quelconque des revendications 1 à 4, **caractérisée en ce que** les particules (3) sont des billes de verre.

6. Bride de fermeture selon l'une quelconque des revendications 1 à 5, **caractérisée en ce qu'**elle est fabriquée en aluminium ou en alliage d'aluminium.

7. Bride de fermeture pour fermer un tuyau souple d'emballage, comprenant deux branches de bride (6, 7) et un fond de bride (5) disposé entre les branches de bride (6, 7), dans laquelle les branches de bride (6, 7) sont coudées par rapport au fond de bride (5), dans laquelle la surface de la bride de fermeture (1) est munie d'une structure et la structure peut être obtenue par contact de pression avec un poinçon (4), **caractérisée en ce que** le poinçon présente une structure de surface générée par irradiation avec un faisceau de particules.
